# EUROPÄISCHE PATENTSCHRIFT

(11) **EP 3 146 293 B1**
(45) Veröffentlichungstag und Bekanntmachung des Hinweises auf die Patenterteilung: **05.12.2018**
(21) Anmeldenummer: 15763487.4
(22) Anmeldetag: 13.05.2015
(51) Int. Cl.: G01B 21/04, G01B 21/20, G01M 11/00

(54) **VORRICHTUNG UND VERFAHREN ZUR GEOMETRISCHEN VERMESSUNG EINES OBJEKTS**
DEVICE AND METHOD FOR GEOMETRICALLY MEASURING AN OBJECT
DISPOSITIF ET PROCÉDÉ DE MESURE GÉOMÉTRIQUE D'UN OBJET

(30) Priorität: 19.05.2014 DE 102014007201
(43) Veröffentlichungstag der Anmeldung: 29.03.2017
(73) Patentinhaber: TAYLOR HOBSON LIMITED, Leicester LE4 9JQ (GB)
(72) Erfinder: MAY, Thilo, 64283 Darmstadt (DE); AM WEG, Christian, 64289 Darmstadt (DE)
(74) Vertreter: Weilnau, Carsten
(86) Internationale Anmeldenummer: PCT/EP2015/000986
(87) Internationale Veröffentlichungsnummer: WO 2015/180826

(56) Entgegenhaltungen:
- EP-A1- 1 519 144
- DE-A1-102011 011 065
- US-A- 6 008 901

## Beschreibung

### Technisches Gebiet

Die vorliegende Erfindung betrifft eine Vorrichtung zur geometrischen Vermessung eines Objekts, insbesondere von optischen Komponenten, wie zum Beispiel von Linsen. Die Erfindung betrifft zudem ein dementsprechendes Verfahren sowie ein Computerprogramm zur geometrischen Vermessung derartiger Objekte.

### Hintergrund

Zur Qualitätssicherung als auch zur Überwachung von industriellen Herstellungsprozessen, insbesondere im Bereich der Feinwerktechnik, Optik sowie in der Fertigungstechnik mechanischer und elektrischer Mikrostrukturen, besteht ein wachsender Bedarf hinsichtlich hochauflösender und präziser Vermessungen von Werkstücken oder allgemein von Objekten.

So ist aus der DE 10 2011 011 065 B4 eine Vorrichtung zur Vermessung zumindest eines Oberflächenabschnitts eines auf einem Träger gelagerten Objekts bekannt. Die Vorrichtung weist dabei ein gegenüber dem Träger fixierbares Referenzobjekt und einen in zumindest einer ersten Richtung gegenüber dem Referenzobjekt beweglichen Halter auf. An dem Halter sind ein Referenzkörper sowie ein Abstandssensor angeordnet, die relativ zueinander drehbar gelagert sind. Die Abstandsmesseinrichtung ist dabei dazu ausgebildet, einen ersten Abstand zu einem ersten Punkt des Oberflächenabschnitts des Objekts und einen zweiten Abstand zu einem hiermit korrespondierenden zweiten Punkt des Referenzkörpers zu bestimmen. Die als Abstandsmesser bezeichnete Abstandsmesseinrichtung weist dabei einen ersten, dem Objekt zugewandten Abstandssensor und einen zweiten, dem Referenzkörper zugewandten Abstandssensor auf. Diese sind dabei diametral entgegengesetzt zueinander ausgerichtet.

Mit einer derartigen Vorrichtung kann die Oberfläche eines Objekts hochpräzise und berührungslos optisch abgetastet bzw. gescannt werden.

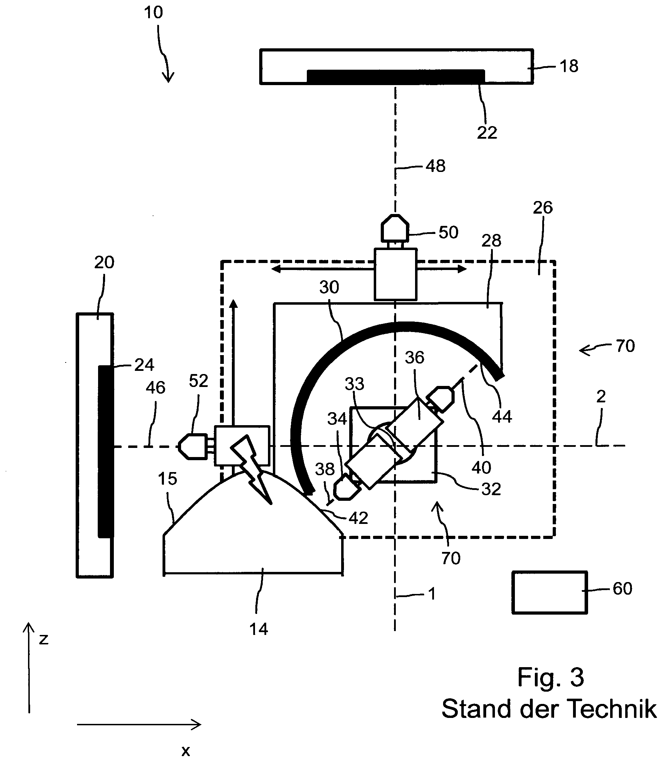

Die aus der DE 10 2011 011 065 B4 grundsätzlich bekannte Vorrichtung ist in Fig. 3 schematisch dargestellt. Die Messeinrichtung 10 weist einen Träger 12 auf, an dem ein zu bemessendes Objekt 14, wie zum Beispiel eine Linse, drehbar oder verschiebbar gelagert ist. Die Vorrichtung 10 weist ferner einen in der in Fig. 3 gezeigten x-z-Ebene beweglichen Halter 26 auf, an welchem ein Referenzkörper 28 sowie ein Lager 32 zur drehbaren Lagerung zweier Abstandssensoren 34, 36, welche eine Abstandsmesseinrichtung 70 bilden, angeordnet ist. Der Referenzkörper 28 weist eine dem Abstandssensor 36 zugewandte, vorliegend etwa nach Art einer Zylinderinnenwandung ausgebildete reflektierende bzw. spiegelnde Referenzfläche 30 auf. Diese kann zum Beispiel als Hohlspiegel ausgestaltet sein. Diametral dem Abstandssensor 36 gegenüberliegend, weist die Abstandsmesseinrichtung 70 einen weiteren, etwa baugleichen Abstandssensor 34 auf. Dieser ist dem Abstandssensor 36 diametral entgegengesetzt ausgerichtet. Die beiden Abstandssensoren 34, 36 sind starr miteinander gekoppelt.

Der Abstandssensor 34 ist auf die zu vermessende Oberfläche 15 des Objekts 14 gerichtet. Die Abstandssensoren 34, 36 sind als optische Abstandssensoren und somit zur Emission und Detektion von Lichtsignalen ausgebildet. Die Sensoren 34 und 36 messen in Reflexionsgeometrie. Das heißt einer auf einen Messpunkt 42 des Objekts 14 gerichteter Messstrahl wird entsprechend der Oberflächenkontur des Objekts 14 reflektiert und zurückgespiegelt und aufgrund einer annähernd orthogonalen Ausrichtung des Messstrahls zur Oberfläche 15 des Objekts 14 wieder vom Sensor 34 detektiert und schließlich einer mit dem Abstandssensor 34 gekoppelten Steuerung mit einer Sensor- und Detektionseinheit zugeführt. Je nach Kontur des zu vermessenden Objekts 14 und der relativen Positionierung des Halters 26 gegenüber dem Objekt 14 ist die Ausrichtung bzw. Orientierung der Abstandssensoren 34, 36 bezüglich der Drehachse 33 am Halter 26 zu verändern und zur Einhaltung der für die Messung erforderlichen Orthogonalitätsbedingung jeweils adaptiv anzupassen.

Insbesondere bei der Vermessung von nicht rotationssymmetrischen Objekten 14, wie zum Beispiel einer in Fig. 3 im Querschnitt angedeuteten und ihrer Längserstreckung senkrecht zur Papierebene, das heißt in γ-Richtung erstreckenden Zylinderlinse, ist es erforderlich, die gesamte Querschnittskontur senkrecht zur Längserstreckung des Objekts 14 mit dem Abstandssensor 34 abzuscannen.

Insbesondere bei stark gekrümmten Oberflächen 15 von zu vermessenden Objekten 14 kann es sich dabei als schwierig erweisen, den Abstandssensor 34 in einem geforderten Abstand und in der für die Abstandsmessung erforderlichen Ausrichtung relativ zum Objekt 14 zu positionieren. Wie beispielsweise in Fig. 3 dargestellt, können Situationen auftreten, in welchen der Referenzkörper 28 beispielsweise mit einem dem Objekt 14 oder dem Objektträger 12 zugewandten, nach unten ragenden Schenkel mit dem zu vermessenden Objekt 14 kollidieren würde.

Eine derartige Kollision ist natürlich zu vermeiden. Um jedoch auch stark gegenüber der Horizontalen geneigte Oberflächenabschnitte des Objekts 14 orthogonal abscannen zu können, ist eine gewisse geometrische Erstreckung des Referenzkörpers 28 unausweichlich.

Um ferner die Position der Abstandsmesseinrichtung 70, insbesondere der beiden Abstandssensoren 34, 36 als auch die Position des Referenzkörpers 28 in der x-z-Ebene präzise zu bestimmen, sind am Halter 26 zwei weitere, vorliegend als Referenzsensoren 50, 52 bezeichnete Abstandssensoren vorgesehen, die entsprechend der Verschiebe- oder Bewegungsrichtungen (x, z) des Trägers 26 relativ zu den ortsfesten Referenzobjekten 18, 20 ausgerichtet sind und mittels derer der Abstand 48 des Trägers 26 zur Referenzfläche 22 des Referenzobjekts 18 in z-Richtung und der Abstand 46 in x-Richtung zum weiteren ortsfest angeordneten Referenzobjekt 20 und zu dessen Referenzfläche 24 messbar ist.

Die in Fig. 3 skizzierten virtuellen Verlängerungen 1, 2 der Messachsen der Referenzsensoren 50, 52 fallen mit der Drehachse 33 der Abstandsmesseinrichtung 70 zusammen. Hiermit ist die gesamte Vorrichtung im Wesentlichen invariant gegenüber etwaigen Drehbewegungen oder Kippbewegungen des Trägers 26 bzw. des Referenzkörpers 28 in der von X-Richtung und Z-Richtung gebildeten Messebene (x, z). Die Überlagerung der gedachten Verlängerungen 1, 2 der Messachsen der Referenzsensoren 50, 52 mit der Drehachse 33 der beiden starr miteinander gekoppelten Abstandssensoren 34, 36 erweist in messtechnischer Hinsicht als besonders vorteilhaft. Hierdurch wird aber auch die geometrische Gestaltungsfreiheit für den Halter 26 und insbesondere für den daran angeordneten Referenzkörper 28 mitunter stark eingeschränkt.

Demgegenüber liegt der vorliegenden Erfindung nun die Aufgabe zugrunde, eine verbesserte Vorrichtung zur geometrischen Vermessung eines Objekts bereitzustellen, die ein erhöhtes Maß an Gestaltungsfreiheit für den Referenzkörper bereitstellt sodass etwaige Kollisionen zwischen dem Referenzkörper und dem zu vermessenden Objekt sicher vermieden werden können ohne dabei die Messgenauigkeit einzuschränken.

Diese Aufgabe wird mit einer Vorrichtung zur geometrischen Vermessung eines Objekts gemäß Patentanspruch 1, mit einem Verfahren zur geometrischen Vermessung eines Objekts nach Anspruch 13 und mit einem Computerprogramm nach Anspruch 14 gelöst. Vorteilhafte Ausgestaltungen sind dabei Gegenstand abhängiger Patentansprüche.

Insoweit ist eine Vorrichtung zur geometrischen Vermessung eines Objekts vorgesehen. Die Vorrichtung weist einen Träger für das Objekt sowie zumindest ein gegenüber dem Träger fixierbares Referenzobjekt auf. Träger und Referenzobjekt sind typischerweise ortsfest angeordnet und stehen in einem festen geometrischen Bezug zueinander. Die Vorrichtung weist ferner einen in zumindest einer Richtung (x, z) gegenüber dem Referenzobjekt beweglichen Halter auf. An dem Halter sind ein Referenzkörper und eine Abstandsmesseinrichtung angeordnet. Die Abstandsmesseinrichtung ist dabei zur Messung eines Abstands zwischen dem Objekt, insbesondere der der Abstandsmesseinrichtung zugewandten Objektoberfläche und dem Referenzkörper, insbesondere einer dem Objekt zugewandten Referenzfläche des Referenzkörpers ausgestaltet. Die Abstandsmesseinrichtung ist drehbar am Halter angeordnet.

Ferner sind an einer dem Referenzobjekt zugewandten Seite des Halters oder des Referenzkörpers ein erster und ein zweiter Referenzsensor voneinander beabstandet angeordnet. Die beiden Referenzsensoren sind zur Messung eines ersten und eines zweiten Abstands zum Referenzobjekt ausgebildet. Insoweit messen beide an ein und derselben Seite des Halters oder des Referenzkörpers angeordnete Referenzsensoren jeweils einen Abstand zu ein und demselben Referenzobjekt. Sollten sich hierbei unterschiedliche Abstände ergeben, ist dies ein Maß für eine mögliche Verkippung des Halters gegenüber der Ausrichtung des Referenzobjekts. Mittels zweier an einer dem Referenzobjekt zugewandten Seite des Halters oder des Referenzkörpers angeordneter Referenzsensoren kann eine mögliche Verkippung und somit nicht nur die relative Position sondern auch die Ausrichtung des Halters 126 in der Messebene (x, z) ermittelt und zur Korrektur der von der Abstandsmesseinrichtung 70 messbaren Abstandswerte verwendet werden.

Die Anordnung zumindest zweier Referenzsensoren an einer dem Referenzobjekt zugewandten Seite oder einem entsprechenden Abschnitt des Halters oder des Referenzkörpers erlaubt es, den virtuellen Schnittpunkt der Verlängerung der Messachsen der Referenzsensoren in einen Bereich außerhalb der Drehachse der Abstandsmesseinrichtung zu verlagern. Insoweit ermöglicht die Vorrichtung vielfältigste und unterschiedlichste geometrische Ausgestaltungen des Halters und des daran angeordneten Referenzkörpers.

Nach einer Weiterbildung hiervon ist vorgesehen, dass der erste Referenzsensor zur Messung des ersten Abstandes zu einem ersten Punkt einer dem Halter zugewandten Referenzfläche des Referenzobjekts ausgebildet ist. Mittels des ersten Referenzsensors ist grundsätzlich ein erster Abstand zwischen dem Halter und der Referenzfläche des betreffenden Referenzobjekts bestimmbar.

Nach einer weiteren Ausgestaltung ist auch der zweite Referenzsensor zur Messung des zweiten Abstands zu einem zweiten Punkt der dem Halter zugewandten Referenzfläche des Referenzobjekts ausgebildet. Typischerweise sind erster und zweiter Referenzsensor parallel zueinander ausgerichtet. Sie sind jedoch in einem vorgegebenen Abstand senkrecht oder schräg zur jeweiligen Messrichtung voneinander beabstandet am Halter angeordnet. Sollte der Halter beispielsweise einer Schwenk- oder Kippbewegung unterliegen, so kann dies durch einen Vergleich der ersten und zweiten Abstände ermittelt werden, die unabhängig voneinander mittels dem ersten und dem zweiten Referenzsensor messbar und insoweit bestimmbar sind.

Nach einer weiteren Ausgestaltung der Vorrichtung ist vorgesehen, dass ein Abstand (d) zwischen dem ersten Punkt und dem zweiten Punkt der Referenzfläche mit dem Abstand (D) zwischen dem ersten und dem zweiten Referenzsensor korreliert. Es ist hierbei denkbar, dass der Abstand (d) zwischen Punkten der Referenzfläche in etwa dem Abstand (D) zwischen dem ersten und dem zweiten Referenzsensor entspricht oder weitreichend identisch hierzu ist. In einer derartigen Ausgestaltung sind die Referenzsensoren beispielsweise parallel zueinander ausgerichtet. Sie können dabei insbesondere im Wesentlichen senkrecht zur Referenzfläche bzw. senkrecht zum Referenzobjekt ausgerichtet sein.

Nach einer weiteren Ausgestaltung weist die Vorrichtung ferner einen als Detektionseinheit ausgestaltete Steuerung auf, mittels welcher aus dem ersten Abstand und dem zweiten Abstand die Position und die Ausrichtung des Halters oder seines Referenzkörpers relativ zum zumindest einen Referenzobjekt präzise bestimmbar ist. Insbesondere kann aus einem Vergleich und/oder aus einer Mittelwertbildung, der unabhängig voneinander gemessenen ersten und zweiten Abstände sowohl die Position des Halters als auch seine Neigung bzw. Verkippung in der Messebene (x, z) bestimmt werden. Insbesondere ist hiermit die Lage der Drehachse der Abstandsmesseinrichtung präzise bestimmbar.

Erfindungsgemäß ist der Halter in einer von einer ersten Richtung (x) und einer zweiten Richtung (z) aufgespannten Ebene (x, z) relativ zu einem ersten und zu einem zweiten Referenzobjekt beweglich. Insoweit kann der Halter in einer zweidimensionalen x-z-Ebene relativ zum Objekt bewegt werden und entsprechend der Beschaffenheit und Kontur der Objektoberfläche stets mit seinem dem Objekt zugewandten Abstandssensor im Wesentlichen orthogonal zu einem Messpunkt auf der Objektoberfläche ausgerichtet werden. Die ersten und zweiten Referenzobjekte erstrecken sich typischerweise senkrecht zueinander. Sie sind relativ zueinander als auch zum Träger für das Objekt fixiert.

Erfindungsgemäß ist vorgesehen, dass der erste Referenzsensor und der zweite Referenzsensor jeweils zum ersten Referenzobjekt ausgerichtet sind. Es ist ferner ein dritter Referenzsensor vorgesehen, der zum zweiten Referenzobjekt ausgerichtet ist. Es ist typischerweise vorgesehen, dass erstes und zweites Referenzobjekt senkrecht oder orthogonal zueinander ausgerichtet sind und dass die den jeweiligen Referenzobjekten zugewandten Referenzsensoren im Wesentlichen senkrecht zu den Referenzflächen der betreffenden Referenzobjekte ausgerichtet sind.

Etwaige durch die Bewegung des Halters induzierte Kipp- oder Schwenkbewegungen des Halters etwa in der x-z-Ebene führen noch nicht zu einer Verletzung der für die Abstandsmessung erforderlichen Orthogonalitätsbedingung. Sie können aber in Hinblick auf die geforderte Messgenauigkeit im Bereich einiger weniger Nanometer oder darunter massive Auswirkungen auf die Genauigkeit der mit der Abstandsmesseinrichtung zu erzielenden Messung haben. Mittels der insgesamt drei Referenzsensoren kann die Position des Trägers und somit auch seines Referenzkörpers und der relativ zum Referenzkörper drehbar gelagerten Abstandsmesseinrichtung in den beiden Richtungen der Messebene (x, z) bestimmt werden. Zudem ist eine auch nur geringfügige Neigung des Trägers relativ zu einem der Referenzobjekte mit Hilfe des ersten und des zweiten Referenzsensors bestimmbar.

Nach einer weiteren Ausgestaltung ist das erste Referenzobjekt ferner parallel zur ersten Richtung (x) ausgerichtet und das zweite Referenzobjekt ist parallel zur zweiten Richtung (z) ausgerichtet, wobei die beiden Richtungen x, z senkrecht zueinander ausgerichtet sind. Wird der Träger beispielsweise entlang der ersten Richtung (x) bewegt, so ändert sich hierdurch der Abstand des Trägers in x-Richtung und somit der Abstand des Trägers zum zweiten Referenzobjekt. Eine derartige Abstandsänderung kann mit dem dritten Referenzsensor präzise ermittelt werden. Für eine Messung der Bewegung des Trägers in der anderen Richtung der Messebene, insbesondere in der beispielsweise vertikal ausgerichteten z-Richtung, kann ein hieraus resultierender und sich ändernder Abstand zum ersten Referenzobjekt 18 mittels des ersten und des zweiten Referenzsensors gleichzeitig ermittelt werden. Ergeben sich hierbei unterschiedliche Abstandswerte, ist dies ein Indiz für eine Verkippung oder auch nur geringfügige Neigung oder Verdrehung des Trägers in der Messebene (x, z).

Nach einer weiteren Ausgestaltung weist die Abstandsmesseinrichtung einen ersten Abstandssensor und einen zweiten Abstandssensor auf, die relativ zum Referenzkörper drehbar gelagert sind. Mittels der beiden Abstandssensoren kann der Gesamtabstand zwischen der Oberfläche des Objekts um eine Referenzfläche des Referenzkörpers für sämtliche Winkelstellungen der Abstandsmesseinrichtung präzise ermittelt werden. Etwaige durch die Drehbewegung der Abstandsmesseinrichtung bedingte Positionsungenauigkeiten ihrer ersten und zweiten Abstandssensoren können durch das diametral entgegengesetzte Abstandsmessen einerseits zur Objektoberfläche und andererseits zum Referenzobjekt präzise ermittelt und rechnerisch kompensiert werden.

Die Abstandsmesseinrichtung ist ferner dazu ausgebildet, einen ersten Abstand zu einem ersten Punkt des zu vermessenden Oberflächenabschnitts des Objekts als auch einen zweiten Abstand zu einem hiermit korrespondierenden zweiten Punkt des Referenzkörpers zu bestimmen. Der mittels der Abstandsmesseinrichtung zu ermittelnde erste Abstand stellt das eigentliche Messsignal dar, während anhand des gemessenen zweiten Abstands eine etwa rotationsbedingte Relativverschiebung zwischen der Abstandsmesseinrichtung und dem, ebenfalls am beweglichen Halter angeordneten, Referenzkörper ermittelt werden kann. Anhand des zu messenden zweiten Abstands kann insoweit eine Abstandskorrektur für den ersten gemessenen Abstand erfolgen.

Eine etwa durch die Drehbewegung der Abstandsmesseinrichtung hervorgerufene nicht reproduzierbare Verschiebung der Sensoren und eine daraus resultierende Verfälschung der Messwerte kann durch die Bestimmung des zweiten Abstands gegenüber einem, hinsichtlich seiner Kontur und Position bekannten Referenzkörpers kompensiert werden. Ein Offset zwischen einer Drehachse und einer Messachse der Abstandsmesseinrichtung kann durch Ermittlung der ersten und zweiten Abstände sowie durch eine relative Ausrichtung von Referenzkörper und Abstandsmesseinrichtung rechnerisch kompensiert werden.

Die Abstandsmesseinrichtung, insbesondere ihre beiden Abstandssensoren befinden sich mit den zumindest zwei, typischerweise mit den drei Referenzsensoren in einer gemeinsamen Ebene, der sog. Messebene. Auf diese Art und Weise können sämtliche für die Oberflächen- und Abstandsmessung in der Messebene relevanten Faktoren, insbesondere eine Neigung und/oder eine Verkippung des Referenzkörpers in der Messeebene sensorisch erfasst und für die Präzision der eigentlichen Messung kompensiert werden.

Es ist nach einer weiteren Ausgestaltung vorgesehen, dass der erste Abstandssensor der Abstandsmesseinrichtung dem Träger bzw. dem daran angeordneten Objekt zugewandt ist, und dass der zweite Abstandssensor dem Referenzkörper zugewandt ist. Typischerweise sind erster und zweiter Abstandssensor diametral entgegengesetzt zueinander ausgerichtet. Sie sind starr miteinander gekoppelt, sodass jedem auf der Objektoberfläche abzutastenden bzw. berührungslos zu vermessenden Punkt ein hiermit korrespondierender Punkt auf der Referenzfläche des Referenzkörpers zugeordnet ist.

Nach einer weiteren Ausgestaltung ist vorgesehen, dass ein Objekthalter drehbar oder linear translatorisch verschiebbar am Träger gelagert ist. Bei einer drehbaren Lagerung liegt die Drehachse des Objekthalters typischerweise in der Messebene der Abstandsmesseinrichtung oder sie erstreckt sich parallel zur Messebene. Eine drehbare Lagerung des Objekthalters an der Trägereinrichtung ist insbesondere für das Vermessen rotationssymmetrischer Objekte in messtechnischer Hinsicht von Vorteil. Ein sich an der Trägereinrichtung drehendes Objekt kann von der Abstandsmesseinrichtung radial von außen nach innen oder von innen nach außen während der Drehbewegung des Objekts abgetastet bzw. berührungslos abgescannt werden.

Bei einer translatorischen Lagerung erstreckt sich die Translations- oder Verschieberichtung typischerweise senkrecht oder unter einem vorgegebenen Winkel zur Messebene der Abstandsmesseinrichtung. Eine translatorische Lagerung des Objekts an der Trägereinrichtung erweist sich insbesondere für ein schrittweises Abscannen oder Abtasten von Objekten mit einer Zylindersymmetrie, beispielsweise von Zylinderlinsen, als vorteilhaft. Hierbei kann insbesondere vorgesehen werden, die Längsachse des zu vermessenden Objekts in Richtung der Translationsachse der Trägereinrichtung auszurichten und das Objekt dementsprechend am Objekthalter anzuordnen.

Nach einer weiteren Ausgestaltung ist der oberhalb des Trägers an einer Basis beweglich angeordnete Halter über gegenüberliegende Außenränder des Objekts bzw. über gegenüberliegende Außenränder des Objektträgers hinweg verfahrbar. Eine derartige Verfahrmöglichkeit und Beweglichkeit des Halters an der Basis und gegenüber dem Träger ermöglicht es, die gesamte Oberflächenkontur eines Objekts abzuscannen bzw. berührungslos, insbesondere optisch abzutasten. Auf diese Art und Weise können auch nicht rotationssymmetrische Objekte bzw. deren Oberfläche präzise vermessen werden.

Die Abstandssensoren bzw. Referenzsensoren sind typischerweise mit mehreren Lichtquellen unterschiedlicher Wellenlänge gekoppelt, um den Abstand zum Objekt oder zum Referenzkörper oder Referenzobjekt mittels eines Mehrwellenlängenmessprinzips zu bestimmen. Ein derartiges Heterodont-Messverfahren ermöglicht eine hochpräzise Abstandsmessung mit einer Auflösung im Nanometer- und Subnanometerbereich und kann ferner einen Eindeutigkeitsbereich des Messergebnisses bis in den Millimeterbereich hinein bereitstellen. Bevorzugt werden als Lichtquellen weitgehend monochromatische Laser vorgesehen, deren Wellenlänge im Bereich zwischen 1520 und 1630 am liegt. Typischerweise liegen die verwendeten Laserwellenlängen im S-, C- oder L-Band des optischen Telekommunikationsspektrums. Es sind aber auch grundsätzlich Wellenlängen im sichtbaren und/oder UV-Spektralbereich denkbar.

Prinzipiell ist die Erfindung auch für eine mit lediglich einer Wellenlänge operierende Abstandsmesseinrichtung implementierbar. Mittels eines Mehrwellenlängen-Messverfahrens kann jedoch der Eindeutigkeitsbereich der empfangenen Signale sichtlich vergrößert werden. Die jeweilige Phase oder Phasenlage der von der Objektoberfläche reflektierten Strahlen wird wellenlängenselektiv detektiert und im Zuge einer elektronischen Auswertung zur Bestimmung des Abstandes verarbeitet.

Die Abstandssensoren können ferner faseroptisch mit den betreffenden Lichtquellen gekoppelt sein. Etwaige umweltbedingte Störeinflüsse können auf diese Art und Weise auf ein Minimum begrenzt werden.

Nach einem weiteren Aspekt betrifft die Erfindung ferner ein Verfahren zur geometrischen Vermessung eines Objekts mittels einer zuvor beschriebenen Vorrichtung. Die Oberflächenkontur eines am Träger gelagerten Objekts wird dabei mittels der am Halter drehbar angeordneten Abstandsmesseinrichtung scannend, das heißt oberflächenabtastend erfasst. Einzelne Messpunkte der Oberfläche des Objekts werden nacheinander mit einem Messstrahl beaufschlagt, sodass für jeden Messpunkt ein Abstand ermittelbar ist. Insoweit werden während eines Scann Prozesses mittels der Abstandsmesseinrichtung mehrere Abstände zwischen Messpunkten des Objekts und Referenzpunkten des Referenzkörpers gemessen. Aus diesen wird ein Oberflächenabbild des Objekts erzeugt, insbesondere rechnergestützt berechnet.

Ferner werden mittels dem ersten und dem zweiten Referenzsensor die Position und die Ausrichtung des Halters oder seines Referenzkörpers relativ zum zumindest einen Referenzobjekt ermittelt. Sofern die Vorrichtung nur einen Bewegungsfreiheitsgrad für den Halter vorsieht, ist die Implementierung von lediglich zwei typischerweise parallel ausgerichteten und senkrecht zu ihrer Messrichtung voneinander beabstandeten Referenzsensoren grundsätzlich ausreichend. In einer Weiterbildung der Vorrichtung und dementsprechend auch in einer Weiterbildung des Verfahrens ist vorgesehen, dass die Position und Ausrichtung des Halters in einer zweidimensionalen Messebene (x, z) mittels dem ersten, dem zweiten und einem dritten Referenzsensor ermittelt werden. Auf Basis der Positions- und Ausrichtungsbestimmung des Halters bzw. des Referenzkörpers wird dann das Oberflächenabbild korrigiert.

So ist insbesondere vorgesehen, dass die mittels des ersten und des zweiten Referenzsensors ermittelte Ausrichtung des Halters zur Korrektur der von der Abstandsmesseinrichtung gemessenen Abstände zwischen Messpunkten des Objekts und Referenzpunkten des Referenzkörpers verwendet werden. Auf diese Art und Weise können aufgrund geringster Neigungen oder Versippungen des Halters bedingte Abstands-Messfehler rechnerisch kompensiert werden.

Es ist hierbei anzumerken, dass das genannte Verfahren mittels der zuvor beschriebenen Vorrichtung durchführbar ist, und dass insoweit sämtliche in Bezug auf die Vorrichtung beschriebenen Merkmale und Vorteile auch gleichermaßen für das Verfahren gelten; und umgekehrt.

Nach einem weiteren Aspekt betrifft die Erfindung ferner ein Computerprogramm zur geometrischen Vermessung eines Objekts mittels einer zuvor beschriebenen Vorrichtung. Das Computerprogramm weist Programmmittel zum scannenden Erfassen der Oberflächenkontur eines am Träger gelagerten Objekts mit Hilfe der Abstandsmesseinrichtung auf. Hierzu ist das Computerprogramm mit Programmmitteln zum Messen mehrerer Abstände zwischen Messpunkten des Objekts und Referenzpunkten des Referenzkörpers mit Hilfe der Abstandsmesseinrichtung ausgestattet. Ferner weist das Computerprogramm Programmmittel auf, mittels deren die Position und die Ausrichtung des Halters oder seines Referenzkörpers relativ zum Referenzobjekt auf Basis der vom ersten und vom zweiten Referenzsensor gemessenen Abstände ermittelt werden. Schließlich sind Programmmittel zum Korrigieren des Oberflächenabbilds auf Basis der ermittelten bzw. gemessenen Position und Ausrichtung des Halters oder seines Referenzkörpers vorgesehen.

An dieser Stelle ist ferner anzumerken, dass das Computerprogramm in der mit der Vorrichtung gekoppelten Steuerung abläuft und in dieser dementsprechend implementierbar ist. Das Computerprogramm dient insbesondere der rechnergestützten Umsetzung des zuvor beschriebenen Verfahrens bei der bestimmungsgemäßen Verwendung der ebenfalls zuvor beschriebenen Vorrichtung. Insoweit gelten sämtliche im Hinblick auf die Vorrichtung und auf das Verfahren genannten Merkmale, Eigenschaften und Vorteile auch gleichermaßen für das Computerprogramm; und umgekehrt.

### Kurzbeschreibung der Figuren

Weitere Ziele, Merkmale sowie vorteilhafte Ausgestaltungen der Erfindung werden anhand der nachfolgenden Beschreibung eines exemplarischen Ausführungsbeispiels näher beschrieben. Hierbei zeigen:
- Fig. 1: eine perspektivische Darstellung der Vorrichtung zur geometrischen Vermessung eines Objekts,
- Fig. 2: eine Seitenansicht der Vorrichtung,
- Fig. 3: eine vereinfachte und schematische Darstellung einer gattungsgemäßen Vorrichtung nach dem Stand der Technik,
- Fig. 4: eine schematische Darstellung der erfindungsgemäßen Vorrichtung in einer ersten Konfiguration,
- Fig. 5: die Darstellung der Vorrichtung gemäß Fig. 4 in einer weiteren Konfiguration und
- Fig. 6: ein Flussdiagramm des Verfahrens.

### Detaillierte Beschreibung

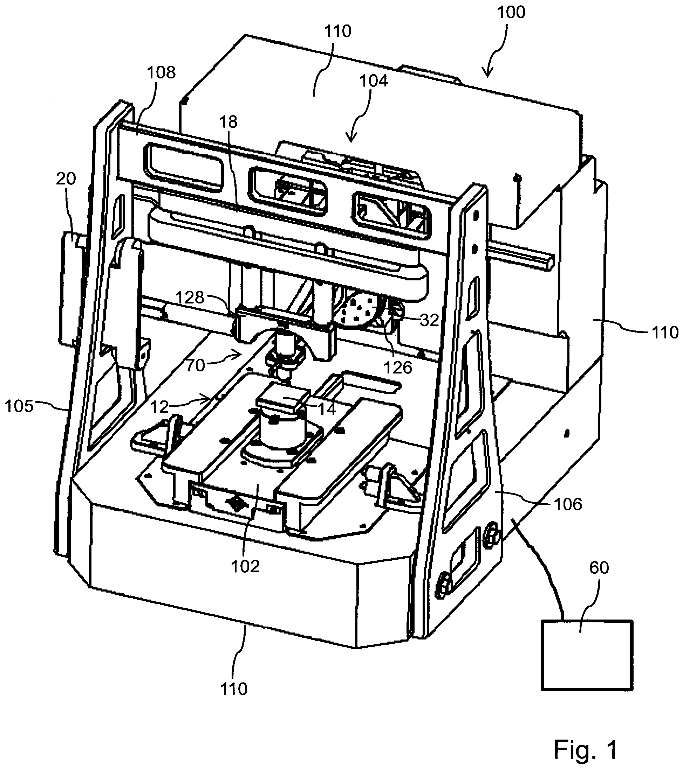

Die in Fig. 1 in perspektivischer Darstellung gezeigte Messvorrichtung 100 weist eine ortsfeste Basis 110 auf, an welcher ein Objekthalter 102 einer Trägereinrichtung 12 beispielsweise translatorisch verschiebbar gelagert ist. An der Trägereinrichtung 12, mithin an deren Objekthalter 102 ist ein zu vermessendes Objekt 14 anordenbar.

Die Vorrichtung 100 weist an ihrer Basis 110 ein die Trägereinrichtung 12 überspannendes und im Wesentlichen eine Messebene (x, z) definierendes Gestell 104 auf. Dieses ist mit der Basis 110 fest und starr verbunden. Das Gestell 104 weist zwei seitliche Schenkel 105, 106 sowie oberhalb der Trägereinrichtung 12 einen sich zwischen den seitlichen Schenkeln 105, 106 erstreckenden Verbindungsbalken 108 auf. An der Unterseite des Verbindungsbalkens 108 ist ein erstes Referenzobjekt 18 angeordnet, während an einer dem Träger 12 zugewandter Innenseiten des linken Schenkels 105 ein zweites Referenzobjekt 20 angeordnet ist.

Die zwei ortsfesten und zueinander fixierten, vorliegend orthogonal zueinander ausgerichteten Referenzobjekte 18, 20 sind unbeweglich und starr am Gestellt 104 befestigt. Das Referenzobjekt 18 erstreckt sich in einer ersten Richtung (x), etwa horizontal, und das zweite Referenzobjekt 20 erstreckt sich senkrecht hierzu in einer zweiten Richtung (z), etwa vertikal. An beiden Referenzobjekten 18, 20 sind einzelne Referenzflächen 22, 24 vorgesehen, die typischerweise als Spiegelflächen oder als reflektierende Flächen ausgebildet sind. Mittels des Gestells 104 sind die Referenzobjekte 18, 20 ortsfest an der Basis 110 angeordnet.

Mittels des Gestells 104 sind die Referenzobjekte 18, 20 auch ortsfest in Bezug auf die Trägereinrichtung 12 für das zu vermessende Objekt 14 angeordnet. An der Basis 110 ist ferner ein in der Messebene (x, z) beweglicher Halter 126 angeordnet. Am Halter 126 ist eine Abstandsmesseinrichtung 70 angeordnet, die über ein Lager 32 bezüglich einer Drehachse schwenkbar am Halter 126 gelagert ist. Die Drehachse 33 des Lagers 32 erstreckt sich hierbei senkrecht zur Messebene (x, z), folglich in γ-Richtung. Der Halter 126 ist an der Basis 110 bezüglich der Messebene (x, z) beweglich gelagert.

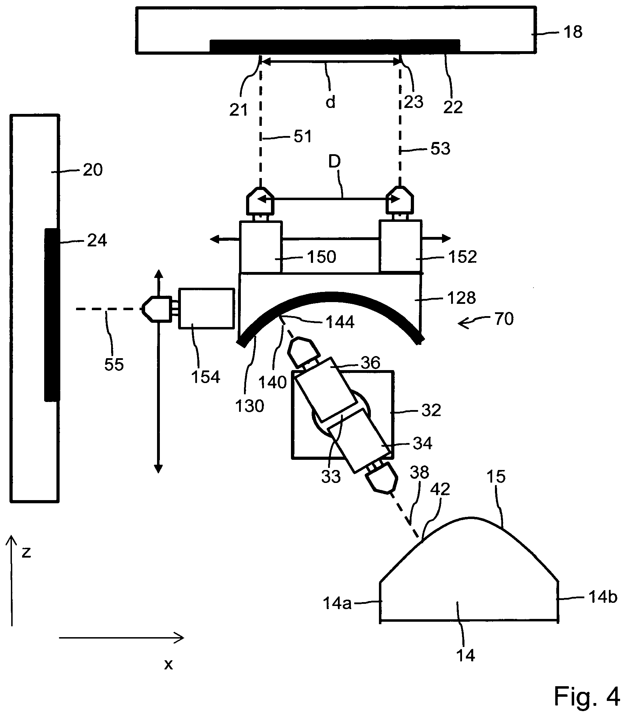

Wie in den Figuren 1 und 4 gezeigt sind an dem Halter 126 ein Referenzkörper 128 sowie ein Lager 32 zur drehbaren Lagerung zweier Abstandssensoren 34, 36 angeordnet. Der Referenzkörper 128 weist eine der Abstandmesseinrichtung 70 zugewandte, vorliegend etwa nach Art einer Zylinderinnenwandung ausgebildete Spiegel- oder Referenzfläche 130 auf. Diese ist bevorzugt als Hohlspiegel ausgebildet. Die Kontur der Referenzfläche 130 ist zur Kalibrierung der Messvorrichtung 100 präzise zu vermessen. Die Kontur und die einzelnen auf der Referenzfläche 130 abzutastenden Punkte 144 sind hinsichtlich ihrer Position bekannt und in einer Auswerteeinheit der Steuerung 60 hinterlegt.

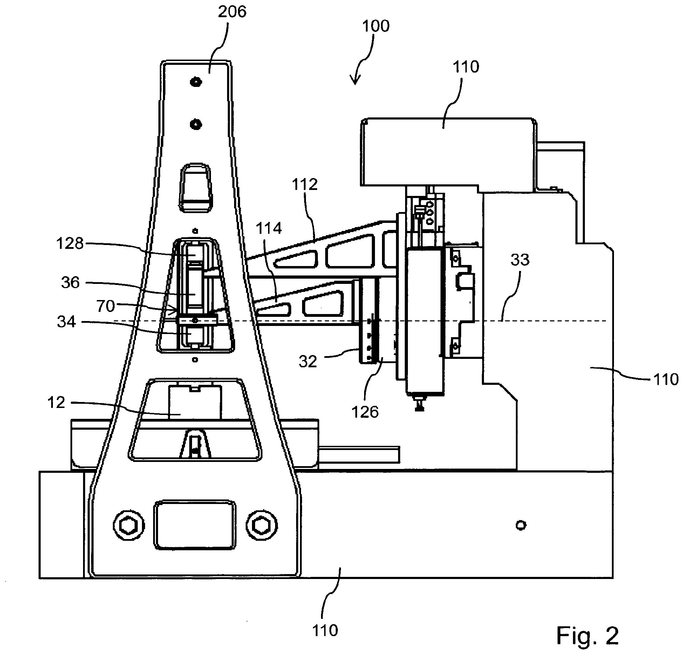

Die Anordnung des Referenzkörpers 128 am Halter 126 erfolgt über einen sich horizontal erstreckenden Ausleger 112 während die Anordnung der Abstandsmesseinrichtung 70 am Halter 126 über einen sich parallel hierzu erstreckenden weiteren, drehbar an der Basis 110 angeordneten Ausleger 114 erfolgt, wie dies in der Seitenansicht der Fig. 2 gezeigt ist.

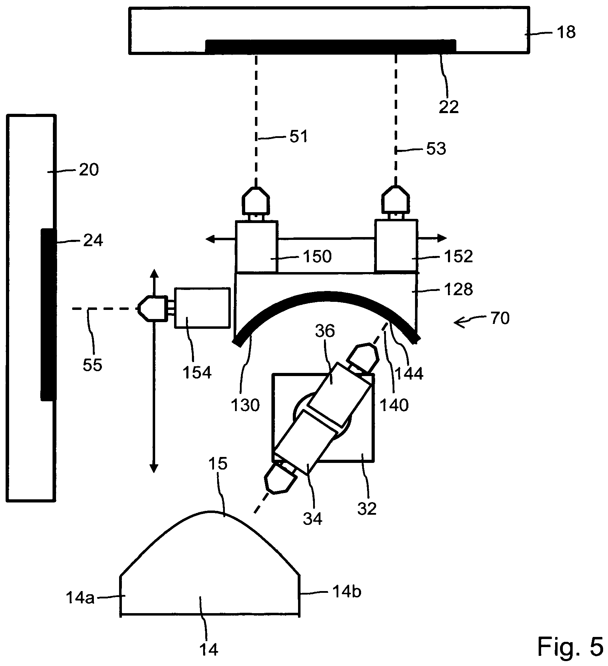

Das Messprinzip der in Fig. 1 gezeigten Vorrichtung 100 ist in den Figuren 4 und 5 konzeptionell in der Messebene (x, z) dargestellt. Das grundlegende Messprinzip, nämlich die Messung des Abstands 38 zwischen einem ersten Abstandsensor 34 und einem Messpunkt 42 auf der Oberfläche 15 des Objekts 14 sowie die damit einhergehende Messung eines hiermit korrespondierenden Abstands 140 zu einem Referenzpunkt 144 der Referenzfläche 130 des im Vergleich zum Stand der Technik modifizierten Referenzkörpers 128 wird im Wesentlichen unverändert beibehalten.

Die zwei entgegengesetzt ausgerichtete Abstandssensoren 34, 36 aufweisende Abstandsmesseinrichtung 70 ist bezüglich einer Drehachse 33 drehbar am Lager 32 gehalten. Die Drehachse 33 verläuft hierbei bevorzugt orthogonal zu der von den beiden Referenzobjekten 18, 20 aufgespannten Ebene (x, z). Der zum Objekt 14 gerichtete Abstandssensor 34 ist hierbei bevorzugt als Mehrwellenlängen-Sensor ausgebildet, der zur Bestimmung eines absoluten Abstands zu einem ausgewählten ersten Punkt 42 auf der zu vermessenden Oberfläche des Objekts 14 ausgebildet ist. Auch können sämtliche weiteren Sensoren 150, 152, 154 als Mehrwellenlängen-Sensoren ausgebildet sein.

Die Sensoren 34, 36 sind zueinander fixiert. Sie sind zudem bezogen auf die Drehachse 33 diametral entgegengesetzt zueinander ausgerichtet. Eine Veränderung der Ausrichtung des Sensors 34 geht somit stets mit einer entsprechenden Richtungsänderung des Sensors 36 einher.

Die Sensoren 34, 36 messen in Reflexionsgeometrie. Das heißt, der auf den Messpunkt 42 gerichtete Messstrahl wird identisch zurückgespiegelt und vom Sensor 34 wieder detektiert und schließlich einer mit dem Sensor 34 gekoppelten, in Fig. 1 angedeuteten Sensor- bzw. Detektionseinheit einer Steuerung 60 zugeführt. Je nach Kontur des zu vermessenden Objekts 14 und der relativen Positionierung des Halters 126 gegenüber dem Objekt 14 ist die Ausrichtung bzw. Orientierung des Sensors 34 zu verändern. Eine Drehung des Abstandssensors 34, 36 um die Drehachse 33 kann jedoch eine Verschiebung des Abstandssensors 34 gegenüber dem Halter 126 mit sich bringen.

Indem der zweite Abstandssensor 36 in einer dem ersten Sensor 34 entgegengesetzten Richtung auf die Referenzfläche 130 des Referenzkörpers 128 ausgerichtet ist, kann eine etwa durch die Drehbewegung der Abstandsmesseinrichtung 70 unweigerlich hervorgerufene Verschiebung in Bezug auf den bekannten Referenzkörper 128 präzise gemessen und im Zuge der elektronischen Auswertung aufgenommener bzw. detektierter Messsignale kompensiert werden.

Erfährt der Sensor 34 etwa rotationsbedingt eine Verschiebung zum Beispiel in Richtung zum Objekt 14, würde dies den zu messenden Abstand 38 verringern. Eine solche Verschiebung würde aber gleichzeitig auch den zweiten Abstand 140, zwischen dem gegenüberliegenden Sensor 36 und der feststehenden Referenzfläche 130 quantitativ um das gleiche Maß vergrößern. Auf diese Art und Weise können etwaige drehbedingte Positionsungenauigkeiten der Abstandsmesseinrichtung 70 präzise vom zweiten Abstandssensor 36 durch Messung eines zweiten Abstands 140 gegenüber einem ausgewählten zweiten Messpunkt 144 auf der Referenzfläche 130 kompensiert werden.

Aus einem Vergleich der Fig. 4 oder 5 mit dem Stand der Technik gemäß Fig. 3 wird deutlich, dass die Erstreckung des Referenzkörpers 128 in der vertikalen z-Richtung deutlich verkürzt ist. Demzufolge wandert zumindest die gedachte Verlängerung 2 eines dem zweiten Referenzkörper 20 zugewandten dritten Referenzsensors 154 nach oben und ist insoweit nicht mehr mit der Drehachse 33 der Abstandsmesseinrichtung 70 überlagert. Eine etwaige und im Hinblick auf die geforderte Genauigkeit unvermeidbare Verkippung oder Kippbewegung des Halters 126 in der Messebene (x, z) hat somit weitreichende Konsequenzen hinsichtlich der Lage- und Positionsbestimmung der Drehachse 33 der Abstandsmesseinrichtung 70 bzw. der Position und Lage des Referenzobjekts 128.

Am Referenzobjekt 128 sind dem ersten Referenzobjekt 18 zugewandt, von daher zwei Referenzsensoren 150, 152 angeordnet, die einen Abstand D aufweisen. Der erste Referenzsensor 150 dient der Messung eines ersten Abstands 51 zum ersten Referenzobjekt 18 bzw. zu dessen Referenzfläche 22. Entsprechend der jeweiligen Position in x-Richtung wird hierbei der Abstand 51 vom ersten Referenzsensor 150 zu einem ersten Punkt 21 auf der Referenzfläche 22 bestimmt. Gleichermaßen wird mittels des zweiten Referenzsensors 152, welcher parallel zum ersten Referenzsensor 150 ausgerichtet ist, ein zweiter Abstand 53 zu einem zweiten Punkt 23 der Referenzfläche 22 des Referenzobjekts 18 gemessen.

Aus einem Vergleich von erstem und zweitem Abstand 51, 53 ist eine etwaige Verkippung oder Neigung des Referenzkörpers 128 bzw. des Halters 126 relativ zu den Referenzobjekten 18, 20 ermittelbar. Die Neigung ist dabei sowohl qualitativ als auch quantitativ bestimmbar, sodass eine hieraus resultierende Positionsveränderung der Abstandsmesseinrichtung 70 und der Drehachse 33 rechnerisch kompensiert werden kann. Die auf der Basis der Messung des ersten und des zweiten Abstands 51, 53 ermittelbare Neigung oder Verkippung des Referenzkörpers 128 bzw. des Halters 126 kann somit messtechnisch kompensiert werden. Die mittels der Abstandsmesseinrichtung 70 ermittelbaren Abstände und ein hieraus bildbares Oberflächenabbild des Objekts 14 kann hinsichtlich etwaiger Positionier- bzw. Neigungsfehler des Referenzkörpers 128 bzw. der Abstandsmesseinrichtung 70 rechnerisch korrigiert werden. Die Position des Halters 126 bzw. des daran angeordneten Referenzkörpers 130 bezüglich der x-Richtung ist mittels des dritten, gleichermaßen als Abstandssensor ausgebildeten Referenzsensors 154 bestimmbar. Mittels diesem wird ein Abstand 55 zum zweiten Referenzobjekt 20, bzw. zu einer Referenzfläche 24 des Referenzobjekts 20 gemessen.

Mittels der insgesamt drei Referenzsensoren 150, 152, und 154 wird es ermöglicht, dass die Drehachse 33 der Abstandsmesseinrichtung 70 nicht mehr zwingend mit den gedachten Verlängerungen 1, 2 der nach dem Stand der Technik vorgesehenen Referenzsensoren 150, 152 überdeckend angeordnet sein muss. Insoweit können unterschiedlichste Geometrien für den Referenzkörper 128 realisiert werden, die insbesondere ein kollisionsfreies Abscannen oder Abtasten der gesamten Oberfläche 15 des zu untersuchenden Objekts 14 ermöglichen, wie dies aus den beiden unterschiedlichen Konfigurationen der Fig. 4 und 5 hervorgeht. Aus einem Vergleich der Fig. 4 und 5 ist ferner erkennbar, dass die Abstandsmesseinrichtung 70 bzw. der Halter 126 im Bereich oberhalb des Trägers 12 bis über beide gegenüberliegende Außenränder 14a, 14b des Objekts 14 hinweg verfahrbar ist. Auf diese Art und Weise können insbesondere auch nicht rotationssymmetrische Objekte 14, wie beispielsweise längserstreckte Zylinderlinsen, geometrisch vermessen werden

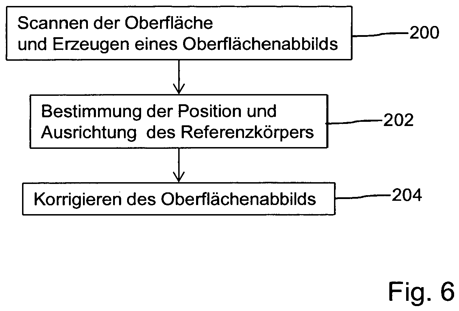

In Fig. 6 ist schließlich ein Flussdiagramm des Verfahrens dargestellt. In einem ersten Schritt 200 wird die Oberflächenkontur des am Träger 12 gelagerten Objekts 14 mittels der am Halter 126 drehbar angeordneten Abstandsmesseinrichtung 70 scannend, das heißt oberflächenabtastend erfasst. Einzelne Messpunkte 42 der Oberfläche 15 des Objekts 14 werden nacheinander mit einem Messstrahl beaufschlagt, sodass für jeden Messpunkt 42 ein Abstand zum Abstandssensor 36 ermittelt wird. Insoweit werden während eines Scannprozesses mittels der Abstandsmesseinrichtung 70 eine Reihe von Abständen 38 zwischen Messpunkten 42 des Objekts 14 und Referenzpunkten 140 des Referenzkörpers 128 gemessen. Aus diesen wird ein Oberflächenabbild des Objekts 14erzeugt, insbesondere rechnergestützt berechnet.

In einem weiteren Schritt 202, welcher simultan zum ersten Schritt 200 abläuft werden mittels dem ersten und dem zweiten Referenzsensor 150, 152 als auch mittels des dritten Referenzsensors 154 die Position und die Ausrichtung des Halters 126 oder seines Referenzkörpers 128 relativ zum zumindest einen Referenzobjekt 18, 20, typischerweise zu beiden Referenzobjekten 18 und 20 ermittelt. Sofern die Vorrichtung 100 nur einen Bewegungsfreiheitsgrad für den Halter 126 vorsieht, ist die Implementierung von lediglich zwei typischerweise parallel und senkrecht zu ihrer Messrichtung voneinander beabstandeter Referenzsensoren 150, 152 grundsätzlich ausreichend.

In einem weiteren Schritt 204 auf Basis der Positions- und Ausrichtungsbestimmung des Halters bzw. des Referenzkörpers das Oberflächenabbild korrigiert.

### Bezugszeichenliste

- 1: Verlängerung
- 2: Verlängerung
- 10: Messvorrichtung
- 12: Träger
- 14: Objekt
- 14a: Außenrand
- 14b: Außenrand
- 15: Oberfläche
- 18: Referenzobjekt
- 20: Referenzobjekt
- 21: Punkt
- 22: Referenzfläche
- 23: Punkt
- 24: Referenzfläche
- 26: Halter
- 28: Referenzkörper
- 30: Referenzfläche
- 32: Lager
- 33: Drehachse
- 34: Abstandssensor
- 36: Abstandssensor
- 38: Abstand
- 40: Abstand
- 42: Messpunkt
- 44: Messpunkt
- 46: Abstand
- 48: Abstand
- 50: Referenzsensor
- 51: Abstand
- 52: Referenzsensor
- 53: Abstand
- 55: Abstand
- 60: Steuerung
- 70: Abstandsmesseinrichtung
- 100: Vorrichtung
- 102: Objekthalter
- 104: Gestell
- 105: Schenkel
- 106: Schenkel
- 108: Verbindungsbalken
- 110: Basis
- 112: Ausleger
- 114: Ausleger
- 126: Halter
- 128: Referenzkörper
- 130: Referenzfläche
- 140: Abstand
- 144: Messpunkt
- 150: Referenzsensor
- 152: Referenzsensor
- 154: Referenzsensor

## Patentansprüche

1. Vorrichtung zur geometrischen Vermessung eines Objekts (14), mit:
- einem Träger (12) für das Objekt (14),
- zumindest einem gegenüber dem Träger (12) fixierbaren Referenzobjekt (18, 20),
- einem in zumindest einer Richtung (x, z) gegenüber dem Referenzobjekt (18, 20) beweglichen Halter (126), an welchem ein Referenzkörper (128) und eine Abstandsmesseinrichtung (70) angeordnet sind, welche Abstandsmesseinrichtung (70) zur Messung eines Abstandes (38, 140) zwischen dem Objekt (14) und dem Referenzkörper (128) ausgestaltet ist, wobei die Abstandsmesseinrichtung (70) drehbar am Halter (126) angeordnet ist,
- wobei an dem Halter (126) oder an dem Referenzkörper (128) dem Referenzobjekt (18, 20) zugewandt ein erster und ein zweiter Referenzsensor (150, 152) voneinander beabstandet angeordnet sind, welche zur Messung eines ersten und eines zweiten Abstandes (51, 53) zum Referenzobjekt (18, 20) ausgebildet sind,
- wobei der Halter (126) in einer von einer ersten Richtung (x) und einer zweiten Richtung (z) aufgespannten Ebene (x, z) relativ zu einem ersten und zu einem zweiten Referenzobjekt (18, 20) beweglich ist, **dadurch gekennzeichnet, dass**
- der erste Referenzsensor (150) und der zweite Referenzsensor (152) zum ersten Referenzobjekt (18) ausgerichtet sind und dass ein dritter Referenzsensor (154) zum zweiten Referenzobjekt (20) ausgerichtet ist,

2. Vorrichtung nach Anspruch 1, wobei der erste Referenzsensor (150) zur Messung des ersten Abstandes (51) zu einem ersten Punkt (21) einer dem Halter (126) oder dem Referenzkörper (138) zugewandten Referenzfläche (22) des Referenzobjekts (18) ausgebildet ist.

3. Vorrichtung nach Anspruch 1, wobei der zweite Referenzsensor (150) zur Messung des zweiten Abstandes (53) zu einem zweiten Punkt (23) der dem Halter (126) oder dem Referenzkörper (138) zugewandten Referenzfläche (22) des Referenzobjekts (18) ausgebildet ist.

4. Vorrichtung nach Anspruch 3, wobei ein Abstand (d) zwischen dem ersten Punkt (21) und dem zweiten Punkt (23) der Referenzfläche (22) mit dem Abstand (D) zwischen dem ersten und dem zweiten Referenzsensor (150, 152) korreliert.

5. Vorrichtung nach einem der vorhergehenden Ansprüche, welche ferner eine Steuerung (60) aufweist, mittels welcher aus dem ersten Abstand (51) und dem zweiten Abstand (52) die Position und die Ausrichtung des Halters (126) oder seiner Referenzkörpers (128) relativ zum Referenzobjekt (18, 20) bestimmbar ist.

6. Vorrichtung nach einem der vorhergehenden Ansprüche, wobei das erste Referenzobjekt (18) parallel zur ersten Richtung (x) ausgerichtet ist und wobei das zweite Referenzobjekt (20) parallel zur zweiten Richtung (z) ausgerichtet ist.

7. Vorrichtung nach einem der vorhergehenden Ansprüche, wobei die Abstandsmesseinrichtung (70) einen ersten Abstandssensor (34) und einen zweiten Abstandssensor (36) aufweist, die relativ zum Referenzkörper (128) drehbar gelagert sind.

8. Vorrichtung nach Anspruch 7, wobei der erste Abstandssensor (34) dem Träger (12) zugewandt ist und wobei der zweite Abstandssensor (36) dem Referenzkörper (128) zugewandt ist.

9. Vorrichtung nach einem der vorhergehenden Ansprüche, wobei ein Objekthalter (102) drehbar oder translatorisch verschiebbar am Träger (12) gelagert ist.

10. Vorrichtung nach einem der vorhergehenden Ansprüche, wobei der oberhalb des Trägers (12) an einer Basis (110) beweglich angeordnete Halter (126) über gegenüberliegende Außenränder (14a, 14b) des Objekts (14) hinweg verfahrbar ist.

11. Vorrichtung nach einem der vorhergehenden Ansprüche, wobei ein virtueller Schnittpunkt der Verlängerungen der Messachsen der Referenzsensoren (150, 152, 154) außerhalb der Drehachse der Abstandsmesseinrichtung (70) liegt.

12. Vorrichtung nach Anspruch 11, wobei zumindest zwei Referenzsensoren (150, 152) an einer dem Referenzobjekt (18) zugewandten Seite des Halters (126) angeordnet sind.

13. Verfahren zur geometrischen Vermessung eines Objekts (14) mittels einer Vorrichtung nach einem der vorhergehenden Ansprüche, wobei die Oberflächenkontur (15) eines am Träger (12) gelagerten Objekts (14) mittels der Abstandsmesseinrichtung (70) scannend erfasst wird, indem:
- mittels der Abstandsmesseinrichtung (70) mehrere Abstände zwischen Messpunkten (42) des Objekts (14) und Referenzpunkten (140) des Referenzkörpers (128) gemessen und ein Oberflächenabbild des Objekts (14) erzeugt wird,
- mittels dem ersten und dem zweiten Referenzsensor (150, 152) die Position und die Ausrichtung des Halters (126) oder seines Referenzkörpers (128) relativ zum Referenzobjekt (18, 20) ermittelt werden, und
- das Oberflächenabbild auf Basis der Position und Ausrichtung des Halters (126) oder seines Referenzkörpers (128) relativ zum Referenzobjekt (18, 20) korrigiert wird.

14. Computerprogramm zur geometrischen Vermessung eines Objekts (14) mittels einer Vorrichtung nach einem der vorhergehenden Ansprüche 1 bis 12, umfassend Programmmittel, die bei der Ausführung des Programms durch einen Computer diesen veranlassen, Schritte des Erfassens, des Messens, des Ermittelns und des Korrigierens auszuführen, mit:
- Programmmitteln zum abscannenden Erfassen der Oberflächenkontur (15) eines am Träger (12) gelagerten Objekts (14) mittels der Abstandsmesseinrichtung (70),
- Programmmitteln zum Messen mehrerer Abstände zwischen Messpunkten (42) des Objekts (14) und Referenzpunkten (140) des Referenzkörpers (128) und zum Erzeugen eines Oberflächenabbilds des Objekts (14),
- Programmmitteln zum Ermitteln einer Position und Ausrichtung des Halters (126) oder seines Referenzkörpers (128) relativ zum Referenzobjekt (18, 20) mittels dem ersten und dem zweiten Referenzsensor (150, 152), und
- Programmmitteln zum Korrigieren des Oberflächenabbilds auf Basis der Position und Ausrichtung des Halters (126) oder seines Referenzkörpers (128) relativ zum Referenzobjekt (18, 20).

## Claims

1. Apparatus for the geometric measurement of an object (14), comprising:
- a carrier (12) for the object (14),
- at least one reference object (18, 20) which is fixable in relation to the carrier (12),
- a holder (126) movable in relation to the reference object (18, 20) in at least one direction (x, z), with a reference body (128) and a distance measuring device (70) being arranged on said holder (126), said distance measuring device (70) being configured to measure a distance (38, 140) between the object (14) and the reference body (128), wherein the distance measuring device (70) is arranged on the holder (126) in a rotable manner,
- wherein a first reference sensor (150) and a second reference sensor (152) are arranged spaced apart from one another, facing the reference object (18, 20), on the holder (126) or on the reference body (128), said reference sensors being embodied to measure a first distance (51) and a second distance (53) to the reference object (18, 20),
- wherein the holder (126) is movable relative to the first reference object (18) and to the second reference object (20) in a plane (x, z) spanned by a first direction (x) and a second direction (z), **characterized in that**
- the first reference sensor (150) and the second reference sensor (152) are oriented to the first reference object (18) and **in that** a third reference sensor (154) is oriented to the second reference object (20).

2. Apparatus according to Claim 1, wherein the first reference sensor (150) is embodied to measure the first distance (51) to a first point (21) of a reference surface (22) of the reference object (18) facing the holder (126) or the reference body (138).

3. Apparatus according to Claim 1, wherein the second reference sensor (150) is embodied to measure the second distance (53) to a second point (23) of the reference surface (22) of the reference object (18) facing the holder (126) or the reference body (138).

4. Apparatus according to Claim 3, wherein a distance (d) between the first point (21) and the second point (23) of the reference surface (22) correlates with the distance (D) between the first reference sensor (150) and the second reference sensor (152).

5. Apparatus according to one of the preceding claims, further comprising a controller (60), by means of which the position and the alignment of the holder (126), or the reference body (128) thereof, relative to the reference object (18, 20) is determinable from the first distance (51) and the second distance (52) .

6. Apparatus according to one of the preceding claims, wherein the first reference object (18) is oriented parallel to the first direction (x) and wherein the second reference object (20) is oriented parallel to the second direction (z).

7. Apparatus according to one of the preceding claims, wherein the distance measuring device (70) comprises a first distance sensor (34) and a second distance sensor (36), which are rotatably mounted relative to the reference body (128).

8. Apparatus according to Claim 7, wherein the first distance sensor (34) faces the carrier (12) and wherein the second distance sensor (36) faces the reference body (128).

9. Apparatus according to one of the preceding claims, wherein an object holder (102) is mounted on the carrier (12) in a rotatable or translationally displaceable manner.

10. Apparatus according to one of the preceding claims, wherein the holder (126) movably arranged on a base (110) above the carrier (12) is displaceable beyond opposite outer edges (14a, 14b) of the object (14).

11. Apparatus according to one of the preceding claims, wherein a virtual intersection of the extensions of the measurement axes of the reference sensors (150, 152, 154) lies away from the axis of rotation of the distance measuring device (70).

12. Apparatus according to Claim 11, wherein at least two reference sensors (150, 152) are arranged on a side of the holder (126) facing the reference object (18).

13. Method for the geometric measurement of an object (14) by means of an apparatus according to one of the preceding claims, wherein the surface contour (15) of an object (14) mounted on the carrier (12) is captured in a scanning manner by means of the distance measuring device (70), by virtue of:
- a plurality of distances between the measuring points (42) of the object (14) and reference points (140) of the reference body (128) being measured by means of the distance measuring device (70) and a surface image of the object (14) being generated,
- the position and the alignment of the holder (126), or of the reference body (128) thereof, relative to the reference object (18, 20) being determined by means of the first reference sensor (150) and the second reference sensor (152), and
- the surface image being corrected on the basis of the position and alignment of the holder (126), or of the reference body (128) thereof, relative to the reference object (18, 20).

14. Computer program for the geometric measurement of an object (14) by means of an apparatus according to one of the preceding Claims 1 to 12, comprising program means which, when the program is executed by a computer, prompt said computer to carry out capturing, measuring, ascertaining and correcting steps, said computer program comprising:
- program means for capturing the surface contour (15) of an object (14), mounted on the carrier (12), in a scanning manner by means of the distance measuring device (70),
- program means for measuring a plurality of distances between the measuring points (42) of the object (14) and reference points (140) of the reference body (128) and for generating a surface image of the object (14),
- program means for ascertaining a position and orientation of the holder (126), or of the reference body (128) thereof, relative to the reference object (18, 20) by means of the first reference sensor (150) and the second reference sensor (152), and
- program means for correcting the surface image on the basis of the position and alignment of the holder (126), or of the reference body (128) thereof, relative to the reference object (18, 20).

## Revendications

1. Arrangement de mesurage géométrique d'un objet (14), comprenant :
- un élément porteur (12) pour l'objet (14),
- au moins un objet de référence (18, 20) qui peut être fixé par rapport à l'élément porteur (12),
- un support (126) mobile par rapport à l'objet de référence (18, 20) dans au moins une direction (x, z), sur lequel sont disposés un corps de référence (128) et un dispositif de mesure de distance (70), ledit dispositif de mesure de distance (70) étant configuré pour mesurer une distance (38, 140) entre l'objet (14) et le corps de référence (128), le dispositif de mesure de distance (70) étant monté de façon rotative sur le support (126),
- un premier et un deuxième capteur de référence (150, 152) étant disposés de façon espacée l'un de l'autre sur le support (126) ou sur le corps de référence (128) en faisant face à l'objet de référence (18, 20), lesquels sont configurés pour mesurer une première et une deuxième distance (51, 53) par rapport à l'objet de référence (18, 20),
- le support (126) étant mobile dans un plan (x, z) couvert par une première direction (x) et une deuxième direction (z) par rapport à un premier et à un deuxième objet de référence (18, 20), **caractérisé en ce que**
- le premier capteur de référence (150) et le deuxième capteur de référence (152) sont orientés par rapport au premier objet de référence (18) et **en ce qu'**un troisième capteur de référence (154) est orienté par rapport au deuxième objet de référence (20).

2. Arrangement selon la revendication 1, le premier capteur de référence (150) étant configuré pour mesurer la première distance (51) par rapport à un premier point (21) d'une surface de référence (22) de l'objet de référence (18) faisant face au support (126) ou au corps de référence (138).

3. Arrangement selon la revendication 1, le deuxième capteur de référence (150) étant configuré pour mesurer la deuxième distance (53) par rapport à un deuxième point (23) de la surface de référence (22) de l'objet de référence (18) faisant face au support (126) ou au corps de référence (138).

4. Arrangement selon la revendication 3, une distance (d) entre le premier point (21) et le deuxième point (23) de la surface de référence (22) étant en corrélation avec la distance (D) entre le premier et le deuxième capteur de référence (150, 152).

5. Arrangement selon l'une des revendications précédentes, lequel possède en outre une commande (60) au moyen de laquelle la position et l'orientation du support (126) ou de son corps de référence (128) par rapport à l'objet de référence (18, 20) peuvent être déterminées à partir de la première distance (51) et de la deuxième distance (52).

6. Arrangement selon l'une des revendications précédentes, le premier objet de référence (18) étant orienté parallèlement à la première direction (x) et le deuxième objet de référence (20) étant orienté parallèlement à la deuxième direction (z).

7. Arrangement selon l'une des revendications précédentes, le dispositif de mesure de distance (70) possédant un premier capteur de distance (34) et un deuxième capteur de distance (36) qui sont montés de façon rotative par rapport au corps de référence (128).

8. Arrangement selon la revendication 7, le premier capteur de distance (34) faisant face à l'élément porteur (12) et le deuxième capteur de distance (36) faisant face au corps de référence (128).

9. Arrangement selon l'une des revendications précédentes, un support d'objet (102) étant monté à rotation ou à translation de manière coulissante sur l'élément porteur (12).

10. Arrangement selon l'une des revendications précédentes, le support (126) monté de façon mobile sur une base (110) au-dessus de l'élément porteur (12) pouvant être déplacé par-dessus les bords extérieurs (14a, 14b) opposés de l'objet (14).

11. Arrangement selon l'une des revendications précédentes, un point d'intersection virtuel des prolongations des axes de mesure des capteurs de référence (150, 152, 154) se trouvant en-dehors de l'axe de rotation du dispositif de mesure de distance (70).

12. Arrangement selon la revendication 11, au moins deux capteurs de référence (150, 152) étant disposés sur un côté du support (126) faisant face à l'objet de référence (18).

13. Procédé de mesurage géométrique d'un objet (14) au moyen d'un arrangement selon l'une des revendications précédentes, le contour superficiel (15) d'un objet (14) déposé sur l'élément porteur (12) étant détecté par balayage au moyen du dispositif de mesure de distance (70), en :
- mesurant plusieurs distances entre des points de mesure (42) de l'objet (14) et des points de référence (140) du corps de référence (128) au moyen du dispositif de mesure de distance (70) et en générant une représentation de la surface de l'objet (14),
- déterminant la position et l'orientation du support (126) ou de son corps de référence (128) par rapport à l'objet de référence (18, 20) au moyen du premier et du deuxième capteur de référence (150, 152), et
- corrigeant la représentation de la surface en se basant sur la position et l'orientation du support (126) ou de son corps de référence (128) par rapport à l'objet de référence (18, 20).

14. Programme informatique destiné au mesurage géométrique d'un objet (14) au moyen d'un arrangement selon l'une des revendications 1 à 12, comprenant des moyens de programme qui, lors de l'exécution du programme par un ordinateur, amènent celui-ci à exécuter les étapes de détection, de mesure, de détermination et de correction, comprenant :
- des moyens de programme destinés à détecter par balayage le contour superficiel (15) d'un objet (14) déposé sur l'élément porteur (12) au moyen du dispositif de mesure de distance (70),
- des moyens de programme destinés à mesurer plusieurs distances entre des points de mesure (42) de l'objet (14) et des points de référence (140) du corps de référence (128) et à générer une représentation de la surface de l'objet (14),
- des moyens de programme destinés à déterminer une position et une orientation du support (126) ou de son corps de référence (128) par rapport à l'objet de référence (18, 20) au moyen du premier et du deuxième capteur de référence (150, 152), et
- des moyens de programme destinés à corriger la représentation de la surface en se basant sur la position et l'orientation du support (126) ou de son corps de référence (128) par rapport à l'objet de référence (18, 20).
